# EUROPÄISCHE PATENTSCHRIFT

(11) **EP 2 520 429 B1**
(45) Veröffentlichungstag und Bekanntmachung des Hinweises auf die Patenterteilung: **24.06.2020**
(21) Anmeldenummer: 12003240.4
(22) Anmeldetag: 03.05.2012
(51) Int. Cl.: B32B 29/04

(54) **Eine mehrschichtige Verpackungsfolie und daraus hergestellte Verpackungen**
Multi-layered packaging film and packaging made from same
Feuille d'emballage multicouche et emballages fabriqués à partir de cette feuille

(30) Priorität: 04.05.2011 DE 202011100263 U
(43) Veröffentlichungstag der Anmeldung: 07.11.2012
(73) Patentinhaber: Wipak Walsrode GmbH & Co. KG, 29699 Walsrode (DE); Schoeller Technocell GmbH & Co. KG, 49086 Osnabrück (DE)
(72) Erfinder: Janssen, Susan, 6471 JM Eygelshoven (NL); Riechert, Enrico, 29664 Walsrode (DE); Ahrens, Adolf, 29664 Walsrode (DE); Niekamp, Dirk, 49152 Bad Essen (DE); Raabe, Günter, 49196 Bad Laer (DE)
(74) Vertreter: Kutzenberger Wolff & Partner

(56) Entgegenhaltungen:
- EP-A1- 2 133 196
- US-A1- 2008 014 391

## Beschreibung

Die vorliegende Erfindung betrifft eine mehrschichtige Verpackungsfolie umfassend eine
(a) Papierschicht als eine der Oberflächenschichten mit vorzugsweise regelmäßig wiederkehrenden, diskontinuierlichen Öffnungen und/oder kontinuierlichen Öffnungen der Papierschicht bis zum verbleibenden, transparenten Folienverbund umfassend die Schichten (b) - (d),
(b)eine transparente Laminierschicht aus thermoplastischen Polymeren,
(c)ggf. wenigstens eine transparente Schicht aus thermoplastischen Polymeren mit vorzugsweise einer bestimmten Funktionalität,
(d)eine transparente, ggf. mehrlagige Heißsiegelschicht aus thermoplastischen Polymeren
und ein- oder mehrteilige Verpackungen, insbesondere für Lebensmittel, aus dieser Verpackungsfolie.

Aus dem Stand der Technik sind zahlreiche Verpackungen, insbesondere für Lebensmittel, bekannt, die ein- oder mehrteilig sind, wie z. B. Einschlagverpackungen oder Verpackungen aus einem Deckel und einem Behälter, wie einer Verpackungsmulde. Solche Verpackungen sind zum einmaligen Gebrauch geeignet oder durch ihre Wiederverschließbarkeit, die auf unterschiedlichen Anordnungen beruhen kann, zur mehrmaligen Entnahme des verpackten Gutes geeignet. Darüber hinaus sind auch für einen einmaligen Gebrauch sogenannte Kettenverpackungen bekannt, gemäß denen Einzelportionen von Lebensmitteln, wie z. B. von Streichfett oder Wurst- oder Schinkenaufschnitt, als Einzelverpackungen zusammenhängend angeordnet und über Perforationen vereinzelbar, im Gebrauch.

All diesen Verpackungen ist gemeinsam, dass sie aus Kunststoffen aufgebaut sind, die eine kontinuierliche Herstellung und Weiterverarbeitung der Verpackungen erlauben. Nachteilig bei solchen Kunststoffverpackungen ist aber, dass die dafür zum Einsatz kommenden Kunststoffe fast ausschließlich auf fossilen Rohstoffen und nicht auf nachwachsenden Rohstoffen basieren.

Was Mehrschichtfolien gemäß Stand der Technik betrifft, wird auf US 2008/014391 A1 und EP 2 133 196 A1 verwiesen.

Es besteht daher ein Bedarf, diese Rohstoffbilanz zugunsten der nachwachsenden Rohstoffe deutlich zu verbessern, ohne die Gebrauchseigenschaften der Verpackungen zu verschlechtern und die Ansprüche der Endverbraucher an solche Verpackungen, insbesondere an Lebensmittelverpackungen, zu vernachlässigen.

Die Aufgabe der vorliegenden Erfindung bestand daher darin, ein Verpackungsmaterial, insbesondere für Lebensmittel, zur Verfügung zu stellen, das zumindest teilweise auf nachwachsenden Rohstoffen basiert, auf bekannten Verpackungsmaschinen verarbeitbar ist und den Bedürfnissen des Endverbrauchers gerecht wird.

Diese Aufgabe wird durch die zur Verfügungstellung der erfindungsgemäßen, mehrschichtigen Verpackungsfolie gelöst, die eine
(a) Papierschicht als eine der Oberflächenschichten mit vorzugsweise regelmäßig wiederkehrenden, diskontinuierlichen Öffnungen und/oder kontinuierlichen Öffnungen der Papierschicht bis zum verbleibenden, transparenten Folienverbund umfassend die Schichten (b) - (d),
(b)eine transparente Laminierschicht aus thermoplastischen **Biopolymeren,**
(c)ggf. wenigstens eine transparente Schicht aus thermoplastischen Polymeren mit vorzugsweise einer bestimmten Funktionalität und ggf. notwendigen Haftvermittlerschichten und
(d)eine transparente, ggf. mehrlagige Heißsiegelschicht aus thermoplastischen **Biopolymeren,**
umfasst.

Erfindungsgemäß wird unter dem Begriff "Öffnung" bzw. Öffnungen der Papierschicht" wenigstens ein kontinuierlich in Längsrichtung der Folienbahn verlaufender Ausschnitt aus der Papierschicht bzw. regelmäßig wiederkehrende, diskontinuierliche Ausschnitte aus der Papierschicht jeweils bis zu dem verbleibenden transparenten Kunststofffolienverbund verstanden.

Diese erfindungsgemäße, mehrschichtige Verpackungsfolie besteht zumindest teilweise aus nachwachsenden Rohstoffen, wie z. B. Cellulose bzw. Cellulose-Derivate in Form der Papierschicht (a), ohne dass es dabei zu Beeinträchtigungen bei der Handhabung von daraus hergestellten Verpackungen wie beim Transport oder der Lagerung kommt. Darüber hinaus erlauben die Öffnungen (Ausschnitte) der Papierschicht, die bei den daraus herzustellenden Verpackungen so angeordnet werden, dass jede daraus hergestellte Verpackung zumindest eine Öffnung aufweist und damit eine Inspektion des darin verpackten Gutes durch den Endverbraucher erlaubt. Darüber hinaus wird ein solches Verpackungsmaterial bzw. die daraus hergestellten Verpackungen auch den optischen und haptischen Bedürfnissen der Endverbraucher gerecht.

Die Papierschicht (a) ist entweder ein Rohpapier oder ein gestrichenes Rohpapier.

Für die Zwecke der Erfindung versteht man unter dem Begriff Rohpapier ein unbeschichtetes oder oberflächengeleimtes Papier. Ein Rohpapier kann neben Zellstofffasern, Leimungsmittel wie Alkylkentendimere, Fettsäuren und/oder Fettsäuresalze, epoxydierte Fettsäureamide, Alkenyl- oder Alkylbernsteinsäureanhydrid, Nassfestmittel wie Polyamin-Polyamid-Epichlorhydrin, Trockenfestmittel wie anionische, kationische oder amphotere Polyamide oder kationische Stärken, optische Aufheller, Füllstoffe, Pigmente, Farbstoffe, Entschäumer und weitere in der Papierindustrie bekannte Hilfsmittel enthalten. Das Rohpapier kann oberflächengeleimt sein. Hierzu geeignete Leimmittel sind beispielsweise Polyvinylalkohol oder oxydierte Stärke. Das Rohpapier kann auf einer Fourdrinier- oder einer Yankee-Papiermaschine(Zylinder-Papiermaschine) hergestellt werden. Das Flächengewicht des Rohpapiers beträgt vorzugsweise 20 bis 350 g/m². Das Rohpapier kann in unverdichteter oder verdichteter Form (geglättet) eingesetzt werden. Besonders gut geeignet sind Rohpapiere mit einer Dichte von 0,8 bis 1,2 g/cm³, vorzugsweise 0,90 bis 1,1 g/cm³. Als Zellstofffasern können beispielsweise gebleichter Hartholz-Kraftzellstoff (LBKP), gebleichter Nadelholz-Kraftzellstoff (NBKP), gebleichter Laubholzsulfitzellstoff (LBSP) oder gebleichter Nadelholzsulfitzellstoff (NBSP) eingesetzt werden. Es können auch aus Papierabfällen gewonnene Zellstofffasern verwendet werden. Die genannten Zellstofffasern können auch als Mischung eingesetzt werden und ggf. Anteile anderer Fasern, zum Beispiel Kunstharzfasern, enthalten. Bevorzugt jedoch werden Zellstofffasern aus 100% Laubholzzellstoff eingesetzt. Die mittlere Faserlänge des ungemahlenen Zellstoffs beträgt vorzugsweise 0,6 bis 0,85 mm (Kajaani-Messung).

Ferner weist der Zellstoff vorzugsweise einen Ligningehalt von weniger als 0,05 Gew.-% auf, insbesondere 0,01 bis 0,03 Gew.-%, bezogen auf die Masse des Zellstoffs.

Als Füllstoff können beispielsweise Kaoline, Calciumcarbonat in seinen natürlichen Formen wie Kalkstein, Marmor oder Dolomitstein, gefälltes Calciumcarbonat, Calciumsulfat, Bariumsulfat, Titaniumdioxid, Talkum, Silica, Aluminiumoxid und deren Gemische für das Rohpapier eingesetzt werden. Besonders geeignet ist Calciumcarbonat vorzugsweise mit einer Korngrößenverteilung, bei der mindestens 60 % der Teilchen kleiner sind als 2 µm und höchstens 40 % kleiner sind als 1 µm. In einer besonders bevorzugten Ausgestaltung der Erfindung wird Calcit mit einer Korngrößenverteilung eingesetzt, bei der etwa 25 % der Teilchen eine Teilchengröße von weniger als 1 µm und etwa 85 % der Teilchen eine Teilchengröße von weniger als 2 µm aufweisen.

In einer weiteren bevorzugten Ausführungsform kann die Papierschicht (a) aus einem gestrichenen Rohpapier bestehen. Bei einem gestrichenen Rohpapier ist auf mindestens einer Seite des Rohpapiers mindestens eine pigmenthaltige Schicht angeordnet. Als Pigment kann ein Metalloxid, Silikat, Carbonat, Sulfid oder Sulfat verwendet werden. Besonders gut geeignet sind Pigmente wie Kaoline, Talkum, Calciumcarbonat und/oder Bariumsulfat. Besonders bevorzugt ist ein Pigment mit einer engen Korngrößenverteilung, bei der mindestens 70% der Pigmentpartikel eine Größe von kleiner als 1µm aufweisen. Der Anteil des Pigments mit der engen Korngrößenverteilung an der gesamten Pigmentmenge beträgt vorzugsweise mindestens 5 Gew.-%, insbesondere 10 bis 90 Gew.-%. Besonders gute Ergebnisse sind mit einem Anteil des Pigments mit der engen Korngrößenverteilung von 30 bis 80 Gew.-% des Gesamtpigments zu erreichen. Unter einem Pigment mit einer engen Korngrößenverteilung werden erfindungsgemäß auch Pigmente mit einer Korngrößenverteilung verstanden, bei der mindestens etwa 70 Gew.-% der Pigmentpartikel eine Größe von kleiner als etwa 1 µm aufweist und bei 40 bis 80 Gew.-% dieser Pigmentpartikel die Differenz zwischen dem Pigment mit der größten Korngröße (Durchmesser) und dem Pigment der kleinsten Korngröße kleiner als etwa 0,4 µm ist. Als besonders vorteilhaft können Calciumcarbonate mit einem d50%-Wert von etwa 0,7 µm eingesetzt werden.

In einer weiteren Ausführungsform der Erfindung kann für die pigmenthaltige Schicht eine Pigmentmischung eingesetzt werden, die aus dem oben genannten Calciumcarbonat und Kaolin besteht. Das Mengenverhältnis Calciumcarbonat/Kaolin beträgt vorzugsweise 30:70 bis 70:30. Das Mengenverhältnis Bindemittel/Pigment in der pigmenthaltigen Schicht kann 0,1 bis 2,5, vorzugsweise 0,2 bis 1,5, insbesondere jedoch etwa 0,9 bis 1,3 betragen. In der pigmenthaltigen Schicht kann jedes bekannte wasserlösliche und/oder wasserdispergierbare Bindemittel eingesetzt werden. Besonders geeignet sind hierzu neben Latexbindern filmbildende Stärken wie thermisch modifizierte Stärken, insbesondere Maisstärken oder hydroxypropylierte Stärken. Die pigmenthaltige Schicht kann mit allen in der Papierherstellung üblichen Auftragsaggregaten inline oder offline aufgebracht werden, wobei die Auftragsmenge vorzugsweise so gewählt wird, dass nach dem Trocknen das Auftragsgewicht 0,1 bis 30 g/m², insbesondere 1 bis 20 g/m², oder gemäß einer besonders bevorzugten Ausführungsform 2 bis 8 g/m² beträgt. In einer bevorzugten Ausführungsform wird die pigmenthaltige Schicht mit einer innerhalb der Papiermaschine integrierten Leimpresse oder Filmpresse aufgetragen.

Die Papierschicht (a) basiert im Wesentlichen auf nachwachsenden Rohstoffen, wie Cellulose und Cellulose-Derivaten und weist vorzugsweise ein Flächengewicht von 20 g/m² bis 350 g/m² auf. Sofern die erfindungsgemäße Verpackungsfolie zur Herstellung einer einteiligen Verpackung bzw. eines Deckels einer zweiteiligen Verpackung eingesetzt wird, weist die Papierschicht (a) vorzugsweise ein Flächengewicht von 20 g/m² bis 150 g/m² auf. Sofern die erfindungsgemäße, mehrschichtige Verpackungsfolie als Behälterfolie, insbesondere zur Herstellung einer tiefgezogenen Verpackungsmulde eingesetzt wird, weist die Papierschicht a) vorzugsweise ein Flächengewicht von 100 g/m² bis 350 g/m² auf und ist vorzugsweise durch Tiefziehen dauerhaft verformbar.

Darüber hinaus besteht die Papierschicht (a) vorzugsweise aus einem ungestrichenen, ggf. nassfest ausgerüsteten Rohpapier in Form einer Rohpapierbahn, die ggf. ein- oder beidseitig gestrichen sein kann. Vorzugsweise wird als Papierschicht (a) ein Kraftpapier oder, sofern die erfindungsgemäße Verpackungsfolie verformt wird, d. h. ggf. durch Tiefziehen zu einem Container vorzugsweise zu einer Verpackungsmulde verarbeitet werden soll, ein tiefziehfähiges Papier, das insbesondere auf Frischfasern mit einer besonderen Dehnfähigkeit basiert, eingesetzt. Zur Herstellung der Papierschicht (a) kann auch zumindest teilweise recyceltes Papier eingesetzt werden.

Die Papierschicht (a) weist entsprechend der daraus herzustellenden Verpackung diskontinuierliche oder kontinuierliche Öffnungen (Ausschnitte) bis zu dem verbleibenden transparenten Kunststoff-Schichtverbund umfassend die Schichten (b) bis (d) auf. Die diskontinuierlichen Öffnungen können diskontinuierliche Ausschnitte (Fenster) in jeder Gestaltung, vorzugsweise polygonale und/oder runde Fenster sein, die bei jeder daraus hergestellten Verpackung mindestens einmal vorliegen. Sofern die Papierschicht (a) kontinuierliche Öffnungen (kontinuierlich verlaufende Ausschnitte) aufweist, so sind diese vorzugsweise als wenigstens ein streifenförmiger Ausschnitt, besonders bevorzugt wenigstens ein Randstreifen, vorzugsweise in Längsrichtung der erfindungsgemäßen Folienbahn. Vorzugsweise kann die Papierbahn bedruckt und ggf. mit Informationen versehen sein. Die Bedruckung der Papierbahn kann durch Tiefdruck, Flexodruck, Digitaldruck oder OffSet-Druck erfolgen.

Die Papierschicht (a) ist eine der Oberflächenschichten der erfindungsgemäßen mehrschichtigen Verpackungsfolie, die auch bei einer aus der mehrschichtigen Verpackungsfolie hergestellten Verpackung als Außenschicht vorliegt.

Als zweite Oberflächenschicht der erfindungsgemäßen Verpackungsfolie liegt eine ggf. mehrlagige, transparente Heißsiegelschicht (d) aus thermoplastischen Polymeren vor, die bei einer aus dieser Folie hergestellte Verpackungsfolie nach innen gerichtet ist.

Die transparente Heißsiegelschicht besteht aus bis zu 100 Gew.-% Biopolymeren als Polymerkomponente.

"Biopolymere" im Sinne der vorliegenden Erfindung sind vorzugsweise aus nachwachsenden Rohstoffen hergestellte, natürliche, halbsynthetische oder synthetische Polymere, die ggf. biologisch abbaubar sind.

Solche zur Herstellung der transparenten Heißsiegelschicht (d) der erfindungsgemäßen Verpackungsfolie geeignete Biopolymere sind wenigstens ein Biopolymeres ausgewählt aus der Gruppe umfassend Milchsäure-Homo- und Copolymere, vorzugsweise Polylactide, besonders bevorzugt DL-Lactid, L-Lactid und D-Lactid, Polyhydroxyalkanoate, Cellulose, Cellulose-Derivate, vorzugsweise Celluloseacetate, Cellulosehydrate, thermoplastische Stärke, Polyester, vorzugsweise Polyhydroxybutyrate, vorzugsweise Poly-ε-caprolactone, vollverseifte Polyvinylacetate, wie Polyvinylalkohole, Copolymere aus wenigstens zwei Monomeren der genannten Polymere und transparente Mischungen aus wenigstens zwei der genannten Polymere.

Als Biopolymere geeignete Polyester zur Herstellung der transparenten Heißsiegelschicht (d) ist vorzugsweise wenigstens ein Polyester ausgewählt aus der Gruppe Milchsäure-Homo- oder Copolymere, vorzugsweise Polylactide, Polyester aus Lactonen mit 4-10 Kohlenstoffatomen, vorzugsweise Poly-ε-caprolactone. Besonders bevorzugt können Poly-ε-caprolactone und/oder Polylactide zum Einsatz kommen.

In einer bevorzugten Ausführungsform weist die transparente Heißsiegelschicht (d) der erfindungsgemäß zum Einsatz kommenden Mehrschichtfolie eine Antifog-Ausrüstung auf. Vorzugsweise enthält die Heißsiegelschicht (d) dabei wenigstens ein Antifog-Additiv oder die Heißsiegelschicht (d) weist zumindest einseitig eine Beschichtung basierend auf wenigstens einem Antifog-Additiv auf. Als Antifog-Additiv wird vorzugsweise wenigstens ein Additiv ausgewählt aus der Gruppe umfassend alkoxylierte Amine, alkoxylierte Amide und Polyol-Fettsäureester, vorzugsweise Glycerolfettsäureester, sowie deren entsprechende Salze, eingesetzt. Wird die Heißsiegelschicht (d) zumindest einseitig mit wenigstens einem Antifog-Additiv beschichtet, so kann die Heißsiegelschicht (d) der erfindungsgemäß zum Einsatz kommenden Mehrschichtfolie vor dieser Beschichtung gegebenenfalls Corona-(vor)behandelt werden.

Sofern die Heißsiegelschicht mehrlagig ist, können die einzelnen Lagen aus denselben Polymeren, vorzugsweise aus derselben Art Polymeren hergestellt sein, aber unterschiedliche physikalische Eigenschaften, wie z.B. Schmelzindex oder Viskosität aufweisen.

Vorzugsweise weist die Heißsiegelschicht (d) der erfindungsgemäßen mehrschichtigen Verpackungsfolie eine Schichtdicke von ≤ 50 µm, besonders bevorzugt von 2 bis 20 µm, ganz besonders bevorzugt von 3 bis 11 µm auf.

Die Heißsiegelschicht (d) kann auch aus einer transparenten Polymermischung bestehen, die zu einer verminderten Siegelfestigkeit der daraus hergestellten Verpackung im Siegelnahtbereich führt, so dass eine peelbare Siegelnahtfestigkeit unter 10 N/15 mm bei der aus der erfindungsgemäßen Verpackungsfolie hergestellten Verpackung im Siegelnahtbereich vorliegt. Dem Fachmann ist bekannt, welche Polymermischungen für eine solche peelbare Heißsiegelschicht (d) eingesetzt werden können.

In der erfindungsgemäßen mehrschichtigen Verpackungsfolie liegt eine transparente Laminierschicht (b) als Verbindungsschicht zwischen der Papierschicht (a) und dem weiteren Folienverbund umfassend die Schichten bis zur Schicht (d) vor.

Als thermoplastische Polymere zur Herstellung der transparenten Schicht (b) eignen sich Biopolymere, die, wie bereits vorstehend erwähnt, auch zur Herstellung der Heißsiegelschicht (d) zum Einsatz kommen können.

Die Laminierschicht (b) hat vorzugsweise eine Schichtdicke von 5 bis 40 µm, besonders bevorzugt von 7 bis 15 µm.

Vorzugsweise weist die erfindungsgemäße Verpackungsfolie wenigstens eine Schicht (c) mit einer bestimmten Funktionalität auf, wodurch unterschiedliche Eigenschaften wie unterschiedliche Barrierewirkungen, eine Wiederverschließbarkeit und/ oder eine Optimierung der mechanischen Eigenschaften des Verpackungsmaterials erzielt werden.

Vorzugsweise kann die erfindungsgemäße mehrschichtige Verpackungsfolie mit wenigstens einer Barriereschicht als transparente Schicht (c), vorzugsweise einer Barriereschicht gegen Gase, wie gegen Sauerstoff oder Wasserdampf, gegen Feuchtigkeit und/oder gegen Migration von niedermolekularen Anteilen und/oder gegen Geschmacks- bzw. Geruchsbeeinträchtigung ausgerüstet sein. Darüber kann es vorteilhaft sein, um einen Wiederschluss von aus einer erfindungsgemäßen, mehrschichtigen Verpackungsfolie hergestellten Verpackungen zu erreichen, zwischen der Heißsiegelschicht (d) und der Laminierschicht (b) eine Schicht aus transparentem Haftklebstoff anzuordnen und ggf. mit einer weiteren Schicht (c) zwischen der Heißsiegelschicht (d) und der Haftklebstoffschicht (c) als Barriereschicht gegen Gase, Migration von niedermolekularen Anteilen und gegen Geschmacks- bzw. Geruchsbeeinträchtigung zu versehen Zur Optimierung von mechanischen Eigenschaften der erfindungsgemäßen Verpackungsfolie kann eine transparente Schicht (c) aus den vorstehend aufgeführten Biopolymeren oder einer transparenten Mischung aus solchen Biopolymeren vorliegen.

Sofern es notwendig ist, kann sowohl jede der genannten Barriereschichten, jede der zur Optimierung der mechanischen Eigenschaften verwendeten Schicht als auch die Haftklebstoffschicht über Haftvermittlerschichten mit der jeweils angrenzenden Schicht verbunden sein.

Sofern die Schicht (c) der erfindungsgemäßen mehrschichtigen Verpackungsfolie eine Barriereschicht gegen Feuchtigkeit dient, wird sie vorzugsweise aus Polypropylen oder Polyamid, vorzugsweise aus Polypropylen, hergestellt.

In einer bevorzugten Ausführungsform weist die erfindungsgemäße Verpackungsfolie eine transparente Schicht (c) als eine Gasbarriereschicht auf, welche ggf. über eine transparente Haftvermittlerschicht jeweils mit der angrenzenden Schicht verbunden ist. Besonders bevorzugt ist die Schicht (c) eine Sauerstoffbarriereschicht und/oder eine Wasserdampfbarriereschicht.

Vorzugsweise ist die Schicht (c) als Barriereschicht gegen Gase der erfindungsgemäßen Mehrschichtfolie aus wenigstens einem thermoplastischen Polymeren ausgewählt aus der Gruppe umfassend Ethylen-Vinylalkohol-Copolymere (EVOH), zumindest teilverseifte Polyvinylacetate, Polyvinylidenchlorid (PVDC), Vinylidenchlorid-Copolymere, vorzugsweise mit einem Anteil an Vinylidenchlorid von wenigstens 80%, bezogen auf das Gesamtgewicht des Vinylidenchlorid-Copolymeren, oder einer Mischung aus wenigstens zwei der genannten Polymere, besonders bevorzugt auf wenigstens einem Ethylen/Vinylalkohol-Copolymeren oder auf SiOₓ oder AlOₓ aufgebaut.

Die zur Herstellung der Schicht (c) eingesetzten Ethylen/Vinylalkohol-Copolymere (EVOH) werden durch vollständige oder unvollständige Hydrolyse von entsprechenden Ethylen/Vinylacetat-Copolymeren (EVAc) gewonnen. Vorzugsweise werden vollverseifte Ethylen/Vinylacetat-Copolymere mit einem Verseifungsgrad ≥ 98% und einem Ethylen-Anteil von 0,01-80 mol-%, vorzugsweise von 1-50 mol-%, jeweils bezogen auf das Gesamtgewicht des Ethylen/Vinylalkohol-Copolymeren, eingesetzt. Diese Polymeren werden auch vorzugsweise zur Herstellung einer Barriereschicht (c) gegen Migration niedermolekularer Anteile aus der Verpackungsfolie, insbesondere beim Vorliegen einer Haftklebstoffschicht für den Wiederverschluss der Verpackung, sowie gegen einer damit ggf. verbundenen Geschmacks- und/oder Geruchsbeeinträchtigung eingesetzt.

Die zur Herstellung der Schicht (c) der erfindungsgemäß zum Einsatz kommenden Mehrschichtfolie zumindest teilverseifte Polyvinylacetate werden durch vollständige oder unvollständige Hydrolyse von entsprechenden Polyvinylacetaten gewonnen. Besonders bevorzugt zur Herstellung der Schicht (c) eingesetzte zumindest teilverseifte Polyvinylacetate sind ausgewählt aus der Gruppe umfassend vollverseifte Polyvinylacetate (Polyvinylalkohole, PVOH) mit einem Verseifungsgrad > 98 % und teilverseifte Polyvinylacetate mit einem Verseifungsgrad von 75 bis einschließlich 98%.

Die Gasbarriereschicht, insbesondere wenn sie auf einen Ethylen-Vinylalkohol-Copolymeren zumindest teilweise basiert, kann vorzugsweise zum Schutz gegen Feuchtigkeit jeweils mit einer Polyamidschicht als weiter Schichten (c) verbunden sein, die jeweils wieder über eine Haftvermittlerschicht mit der angrenzenden Schicht, vorzugsweise der Schicht (b) bzw. (d) verbunden ist.

Vorzugsweise weist die Schicht (c) als Barriereschicht der erfindungsgemäß zum Einsatz kommenden Mehrschichtfolie eine Schichtdicke von 1 µm bis 30 µm, besonders bevorzugt von 1 µm bis 20 µm, ganz besonders bevorzugt von 1 µm bis 10 µm, insbesondere von 1,5 bis 7 µm auf.

Sofern die Schicht (c) zur Optimierung der mechanischen Eigenschaften der erfindungsgemäßen Verpackungsfolie beiträgt, weist sie vorzugsweise eine Schichtdichte von 5 µm bis 500 µm, besonders bevorzugt bei Verwendung als Schlauchbeutel oder Deckelmaterial 20 - 150 µm, bzw. bei Verwendung für Behälter, wie Mulden, 100 - 500 µm auf.

Zur Herstellung einer Schicht (c) aus Haftklebstoff zum Wiederverschluss einer aus der erfindungsgemäßen mehrschichtigen Verpackungsfolie hergestellten Verpackung eignen sich vorzugsweise druckempfindliche Haftklebstoffe, die bei Anwendung von Druck bei der Umgebungstemperatur, vorzugsweise bei 25°C, bereits klebefähig, aber fest sind.

Als Haftklebstoffe eignen sich polymere Haftklebstoffe auf der Basis von Dispersionen, von z. B. Acrylharzen oder Kautschuk, oder Hotmelts auf Basis von Styrol/Butadien-Block-Copolymeren oder Styrol/Isopren/Butadien-Block-Copolymeren oder UV vernetzbare Hotmelts. Aufgrund der Klebeeigenschaften dieser Haftklebstoffe ist es möglich, nach dem ersten Öffnen einer aus der erfindungsgemäßen Mehrschichtfolie hergestellten Verpackung, die Verpackung durch Andrücken wieder zu verschließen und das verbleibende Füllgut ohne Beeinträchtigung durch die Umgebung weiter zu lagern.

Der Haftklebstoff für eine solche Haftklebstoffschicht als Schicht (c) wird in einer solchen Menge aufgetragen, dass die Schichtdicke vorzugsweise im Bereich von 1 - 40 µm, besonders bevorzugt 7 - 20 µm, ganz besonders bevorzugt 10 - 15 µm liegt. Vorzugsweise ist eine solche Haftklebstoffschicht zwischen der Heißsiegelschicht und den weiteren Schichten, vorzugsweise der Laminierschicht angeordnet, wobei vorzugsweise zwischen der Heißsiegelschicht und der Haftklebstoffschicht vorzugsweise eine Migrationsbarriereschicht, wie vorstehend beschrieben, vorliegen kann. Eine solche Migrationsbarriereschicht hat vorzugsweise eine Schichtdicke von ≤ 5 µm, vorzugsweise unter 3 µm, besonders bevorzugt 1 - 2 µm.

In einer bevorzugten Ausführungsform ist die Schicht (c) über eine transparente Haftvermittlerschicht mit der jeweils an sie angrenzenden Schicht, vorzugsweise der Schicht (b) bzw. (d), verbunden.

Zur Herstellung der Haftvermittlerschicht(en) der erfindungsgemäßen Mehrschichtfolie eignen sich thermoplastische Polymere, die mit polaren Gruppen, vorzugsweise mit organischen Säure-Gruppen und/oder organischen Säureanhydrid-Gruppen, besonders bevorzugt mit cyclischen organischen Säureanhydrid-Gruppen, ganz besonders bevorzugt mit Maleinsäureanhydrid-Gruppen modifiziert sind. Methoden zur Modifizierung der thermoplastischen Polymere, die sich zur Herstellung der Haftvermittlerschicht(en) eignen, sind dem Fachmann bekannt. Vorzugsweise ist die Modifizierung durch Pfropfung auf den thermoplastischen Polymeren erfolgt.

Vorzugsweise basieren die Haftvermittlerschicht(en) auf wenigstens einem modifizierten thermoplastischen Olefin-Homo- und/oder Copolymeren. Bevorzugt basiert die Haftvermittlerschicht auf wenigstens einem mit einem cyclischen organischen Säureanhydrid-Gruppen modifizierten Ethylen- oder Propylen- Homo- oder Copolymeren, besonders bevorzugt auf einem mit Maleinsäureanhydrid-Gruppen modifizierten Ethylen- oder Propylen- Homo- oder Copolymeren.

Vorzugsweise weist die Haftvermittlerschicht der erfindungsgemäßen Mehrschichtfolie jeweils eine Schichtdicke von höchstens 10 µm, besonders bevorzugt höchstens 5 µm, ganz besonders bevorzugt von höchstens 3 µm auf.

Jede der Schichten der erfindungsgemäßen mehrschichtigen Verpackungsfolie, vorzugsweise die Heißsiegelschicht (d), kann, falls erforderlich, wenigstens mit einem dem Fachmann bekannten üblichen Additiven ausgerüstet werden, vorzugsweise mit wenigstens einem Additiv ausgewählt aus der Gruppe umfassend Antiblockmittel, Gleitmittel, Antistatika, Farbstoffe, anorganische Füllstoffe, Antioxidantien, UV Stabilisatoren, UV Absorbern bzw. Sauerstoffabsorber, sofern dabei die Transparenz des aus den thermoplastischen Polymeren hergestellten Folienverbundes aus der Schicht (b) bis (d) nicht beeinträchtigt wird.

Die erfindungsgemäße mehrschichtige Verpackungsfolie weist vorzugsweise eine Gesamtschichtdicke von 40 - 1000 µm, besonders bevorzugt von 40 - 150 µm bei Verwendung als Schlauchbeutel oder Deckelmaterial bzw. von 100 - 1000 µm bei Verwendung zur Herstellung eines geformten Behälters, vorzugsweise als Muldenfolien auf.

Figur 1 zeigt eine Draufsicht auf einen Abschnitt der erfindungsgemäßen mehrschichtigen Verpackungsfolie (1) und mit fensterförmigen Öffnung (Ausschnitt) (2).

Figur 2 zeigt einen Querschnitt des Folienabschnittes gemäß Figur 1 im Bereich der diskontinuierlichen Öffnung (Ausschnitt) der erfindungsgemäßen mehrschichtigen Verpackungsfolie.

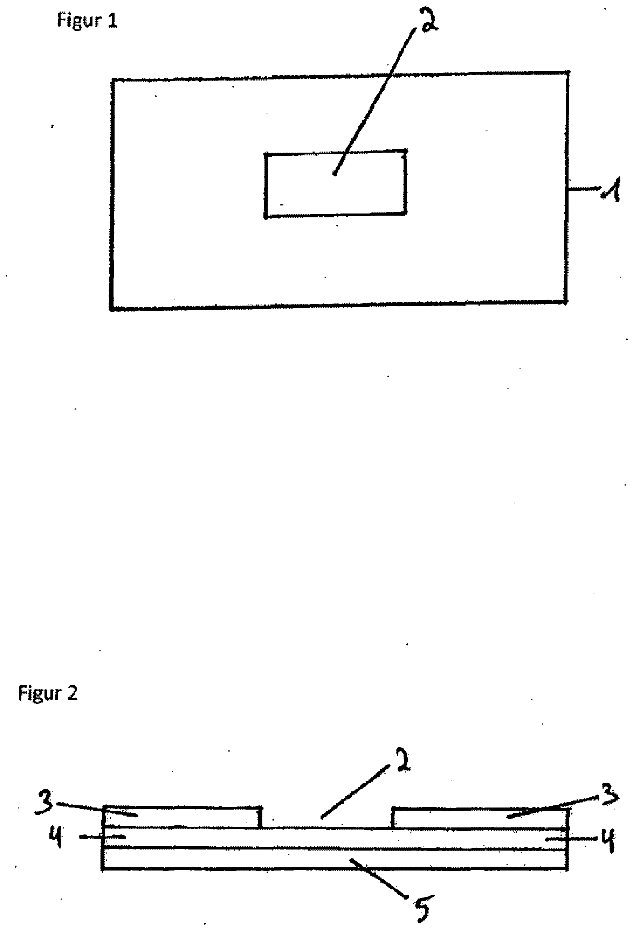

Die Figur 1 zeigt einen Abschnitt (1) der erfindungsgemäßen Verpackungsfolie, die eine diskontinuierliche Öffnung (2) (Ausschnitt aus) der Papierschicht aufweist.

In Figur 2 wird der Querschnitt der Figur 1 im Bereich der diskontinuierlichen Öffnung, die als rechteckiges Fenster (2) (rechteckiger Ausschnitt) ausgebildet ist, gezeigt. Dabei wird mit Ziffer (2) das Fenster in der Papierschicht (a), die mit der Ziffer (3) bezeichnet ist, wobei die Papierschicht (a) über die Laminierschicht (b) mit der Heißsiegelschicht (d), die jeweils mit den Ziffern (4) bzw. (5) bezeichnet ist, verbunden ist.

Besonders bevorzugte Verpackungsfolien haben folgenden Aufbau (a)/(b)/ggf.(c)/ggf.(c1)/(c2)...(d)

Die erfindungsgemäße, mehrschichtige Verpackungsfolie kann hergestellt werden, indem zunächst aus der Papierschicht mit Hilfe einer Stanzvorrichtung, einer rotierenden Schneidevorrichtung oder mit Hilfe von Lasern die wiederkehrenden diskontinuierlichen Öffnungen (Ausschnitte) in einer vorgegebenen Anordnung bzw. einem Muster automatisch gesteuert aus der Papierschicht entfernt werden. Die kontinuierlichen Öffnungen (Ausschnitte) in Form von wenigstens einem Streifen (fortlaufender, streifenförmiger Ausschnitt) werden ebenso mit Hilfe der genannten Vorrichtungen aus der Papierschicht entfernt. Die so erhaltene Papierschicht wird mit einem Folienverbund aus den Schichten (b) - (d), der vorzugsweise durch Extrusion erhalten wurde, unter Druck und ggf. ausreichender Erwärmung der Schicht (b) mit der so vorbereiteten Papierschicht verbunden. Es ist auch möglich, durch Extrusion der Schicht (b) zwischen dieser so vorbereiteten Papierschicht und den bereits vorhandenen restlichen Folienverbund in bekannter Weise zu verbinden. Der transparente Folienverbund der Schichten (b) - (d) kann auch insgesamt coextrudiert werden.

Wie bereits ausgeführt, eignet sich die erfindungsgemäße mehrschichtige Verpackungsfolie zur Herstellung von ein- und mehrteiligen Verpackungen, die durch den Ausschnitt aus der Papierschicht und damit durch wenigstens einen transparenten Teilbereich des Verpackungsmaterials die Durchsicht auf das verpackte Gut erlauben. Darüber hinaus ist zumindest wegen der Papierbahn eine teilweise Wiederverwertung der Verpackung möglich, da das Papier, getrennt von dem weiteren Folienverbund, wieder für die Papierherstellung mit üblichen Papiermühlen verwendet werden kann. Darüber hinaus erlaubt der Einsatz von weiteren Biopolymeren neben dem Papiereinsatz, die vorzugsweise von nachwachsenden Rohstoffen stammen, eine Schonung der fossilen Rohstoffe und/ oder eine umweltfreundliche Entsorgung.

Ein weiterer Gegenstand der vorliegenden Erfindung ist daher eine ein- oder mehrteilige Verpackung aus einer erfindungsgemäßen mehrschichtigen Verpackungsfolie, wobei sich die Folie sowohl zur Herstellung von Schlauchbeuteln, Vierrandsiegelbeuteln als auch von mehrteiligen Verpackungen eignet. Dabei kann die mehrschichtige Verpackungsfolie zur Herstellung des Deckels oder eines Behälters, vorzugsweise einer Verpackungsmulde eingesetzt werden. Vorzugsweise wird bei der Herstellung eines Behälters, vorzugsweise einer Verpackungsmulde, eine Verpackungsfolie eingesetzt, die neben den thermoplastischen Polymeren eine tiefziehfähige Papierbahn aufweist. Die Herstellung ist auf den dem Fachmann bekannten Verpackungsmaschinen möglich.

Die Herstellung von einteiligen Verpackungen, wie Schlauchbeutel, ist dem Fachmann bekannt und kann auf entsprechender horizontal oder vertikal arbeitenden Verpackungsmaschinen kontinuierlich durchgeführt werden.

Sofern eine Einschlagverpackung, vorzugsweise in Form eines Vierrandsiegelbeutels, aus der erfindungsgemäßen mehrschichtigen Verpackungsfolie hergestellt wird, können auch für die Herstellung solcher Verpackungen dem Fachmann bekannte Verpackungsmaschinen eingesetzt werden.

Selbstverständlich ist es dem Fachmann geläufig, dass die erfindungsgemäße Verpackung so verwendet wird, dass die Heißsiegelschicht (d) zum Verbinden der einzelnen Verpackungsabschnitte nach innen, zum verpackten Gut, gerichtet ist und die Papierbahn nach außen als Außenschicht der Verpackung angeordnet wird.

Sofern Einschlagverpackungen, vorzugsweise Vierrandsiegelbeutel, aus der erfindungsgemäßen mehrschichtigen Verpackungsfolie hergestellt werden, so können die einzelnen Beutel über Perforationen miteinander verbunden sein, über die sie auch, jeweils als Portionsverpackung vereinzelbar sind. Solche Kettenbeutelverpackungen können je nach Konfiguration der einzelnen Beutel, vorzugsweise als rechteckige oder quadratische Vierrandsiegelbeutel, ggf. auch ziehharmonikaartig faltbar, ggf. mit einer Banderole zum Zusammenhalt dieser ziehharmonikaartigen Anordnung versehen, gelagert und verwendet werden.

Die Herstellung solcher Kettenbeutelverpackungen ist dem Fachmann bekannt und u. a. dem deutschen Gebrauchsmuster DE 20 2010 007 226 U1 zu entnehmen. Die entsprechende Offenbarung wird hiermit als Offenbarung der vorliegenden Anmeldung eingeführt.

Ein weiterer Gegenstand der vorliegenden Erfindung ist eine ein- oder mehrteilige Verpackung aus einer erfindungsgemäßen mehrschichtigen Verpackungsfolie, in der als verpacktes Gut ein Lebensmittel, vorzugsweise in Form einer Blockware oder in Scheiben wie ein Aufschnitt, einer teilchenförmigen Ware oder vereinzelter Stückgüter, ggf. als Einzelportion, vorliegt.

Als in einer erfindungsgemäßen Verpackung verpackte Lebensmittel eignen sich wenigstens ein Käse, wenigstens eine Wurst, wenigstens ein Schinken, wenigstens ein Fleisch bzw. Fleischteil, wenigstens ein Geflügel bzw. Geflügelteil, wenigstens eine Backware, wenigstens eine Backzutat, wenigstens ein Knabbergebäck, wie Chips oder Erdnußflips, wenigstens ein Snack, Nüsse, Kerne, wenigstens eine Süßware, wie Schokolade, Bonbons, Kaugummi, wenigstens ein Fisch bzw. Fischteil, wenigstens ein festes oder flüssiges Fertiggericht, wie eine Pastete, Streichfette, wie Butter, Margarine, Mayonnaise, Senf, Ketchup oder ein Gewürz oder Gewürzmischungen.

Sofern die vorstehend beschriebenen Kettenbeutelverpackungen vorliegen, so eignen sich die über Perforation verbunden Vierrandsiegelbeutel insbesondere zur Verpackung von jeweils einer für eine Einzelperson ausreichenden Portion.

### Bezugszeichenliste

- 1: Abschnitt der erfindungsgemäßen mehrschichtigen Verpackungsfolie
- 2: Diskontinuierliche Öffnung in Form eines rechteckigen Fensters in der Papierbahn durch Ausschneiden des entsprechenden Ausschnittes aus der Papierbahn (a)
- 3: Papierbahn (a)
- 4: Laminierschicht (b)
- 5: Heißsiegelschicht (d)

## Patentansprüche

1. Eine mehrschichtige Verpackungsfolie umfassend eine
(a) Papierschicht als eine der Oberflächenschichten mit vorzugsweise regelmäßig wiederkehrenden, diskontinuierlichen Öffnungen und/oder kontinuierlichen Öffnungen der Papierschicht bis zum verbleibenden, transparenten Folienverbund umfassend die Schichten b) - d),
(b) eine transparente Laminierschicht aus wenigstens einem thermoplastischen Biopolymeren, ausgewählt aus der Gruppe Polyhydroxyalkanoate, Cellulose, Cellulose-Derivate, Cellulosehydrate, thermoplastische Stärke, Milchsäure-Homo- oder Copolymere, Polyester aus Lactonen mit 4-10 Kohlenstoffatomen, Copolymere aus wenigstens zwei Monomeren der genannten Biopolymere und transparente Mischungen aus wenigstens zwei der genannten Biopolymere,
(c) ggf. wenigstens eine transparente Schicht aus thermoplastischen Polymeren mit vorzugsweise einer bestimmten Funktionalität und ggf. notwendigen Haftvermittlerschichten,
(d) eine transparente, ggf. mehrlagige Heißsiegelschicht aus wenigstens einem thermoplastischen Biopolymeren ausgewählt aus der Gruppe Polyhydroxyalkanoate, Cellulose, Cellulose-Derivate, Cellulosehydrate, thermoplastische Stärke, Milchsäure-Homo- oder Copolymere, Polyester aus Lactonen mit 4-10 Kohlenstoffatomen, Copolymere aus wenigstens zwei Monomeren der genannten Biopolymere und transparente Mischungen aus wenigstens zwei der genannten Biopolymere.

2. Eine mehrschichtige Verpackungsfolie nach Anspruch 1, **dadurch gekennzeichnet, dass** die diskontinuierlichen Öffnungen der Papierschicht (a) als Fenster in jeder Gestaltung, vorzugsweise als polygonale und/oder runde Fenster, und die kontinuierlichen Öffnungen als Streifen, vorzugsweise als wenigstens ein Randstreifen, in Längsrichtung der Folienbahn vorliegen.

3. Eine mehrschichtige Verpackungsfolie nach Anspruch 1 oder 2, **dadurch gekennzeichnet, dass** die Papierschicht (a) ein Flächengewicht von 20 g/m² - 350 g/m² aufweist.

4. Eine mehrschichtige Verpackungsfolie nach einem der Ansprüche 1 - 3, **dadurch gekennzeichnet, dass** die Papierschicht (a) aus einem ungestrichenen, ggf. nassfest ausgerüsteten Rohpapier besteht.

5. Eine mehrschichtige Verpackungsfolie nach einem der Ansprüche 1 - 4, **dadurch gekennzeichnet, dass** die Papierschicht (a) aus Kraftpapier oder tiefziehfähigen Papier besteht.

6. Eine mehrschichtige Verpackungsfolie nach einem der Ansprüche 1 - 5, **dadurch gekennzeichnet, dass** die Papierschicht (a) bedruckt und ggf. mit Informationen versehen ist.

7. Eine mehrschichtige Verpackungsfolie nach einem der Ansprüche 1 - 6, **dadurch gekennzeichnet, dass** die transparente Laminierschicht (b) aus wenigstens einem thermoplastischen Biopolymeren ausgewählt aus der Gruppe umfassend Poly-ε-caprolactone und Polylactideund transparente Mischungen aus den genannten thermoplastischen Biopolymeren aufgebaut ist.

8. Eine mehrschichtige Verpackungsfolie nach einem der Ansprüche 1 - 7, **dadurch gekennzeichnet, dass** die transparente, ggf. mehrlagige Heißsiegelschicht (d) aus wenigstens einem thermoplastischen Biopolymeren ausgewählt aus der Gruppe umfassend Poly-ε-caprolactone und Polylactide und transparente Mischungen aus den genannten Biopolymeren aufgebaut ist.

9. Eine mehrschichtige Verpackungsfolie nach Anspruch 8, **dadurch gekennzeichnet, dass** die Heißsiegelschicht (d) peelbar versiegelbar ist.

10. Eine mehrschichtige Verpackungsfolie nach Anspruch 1 - 9, **dadurch gekennzeichnet, dass** die Heißsiegelschicht aus wenigstens zwei Lagen, vorzugweise aus denselben Polymeren oder derselben Art von Polymeren, aber mit unterschiedlichen physikalischen Eigenschaften, besteht.

11. Eine mehrschichtige Verpackungsfolie nach Anspruch 1 - 10, **dadurch gekennzeichnet, dass** wenigstens eine Schicht (c) als eine Schicht zur Optimierung von mechanischen Eigenschaften und/ oder als eine Barriereschicht, vorzugsweise als eine Barriereschicht gegen Gase, wie Sauerstoff oder Wasserdampf, gegen Feuchtigkeit, gegen Migration von niedermolekularen Anteilen und/ oder gegen Geschmacks- bzw. Geruchsbeeinträchtigung, vorliegt

12. Eine mehrschichtige Verpackungsfolie nach Anspruch 1 - 11, **dadurch gekennzeichnet, dass** eine Schicht (c) zwischen der Schicht (b) und der Heißsiegelschicht (d) ggf. über eine Haftvermittlerschicht verbunden, als eine transparente Haftklebstoffschicht und ggf. eine weitere Schicht (c1) als Barriereschicht zwischen der Heißsiegelschicht (d) und der Haftklebstoffschicht als Wiederverschlussanordnung vorliegt.

13. Eine mehrschichtige Verpackungsfolie nach einem der Ansprüche 1 - 12, **dadurch gekennzeichnet, dass** wenigstens eine der Schichten aus thermoplastischen Polymeren mit üblichen Additiven, vorzugsweise mit Antifog-Additiven, UV-Stabilisatoren, UV Absorbern, Sauerstoffabsorbern, Antioxidantien, Antistatika, Antiblockmitteln und/oder Gleitmitteln ausgerüstet und/oder transparent eingefärbt sein kann.

14. Verwendung einer mehrschichtigen Verpackungsfolie nach einem der Ansprüche 1 - 13 zur Herstellung einer ein- oder mehrteiligen Verpackung mit wenigstens einem transparenten Teilbereich des Verpackungsmaterials zur Durchsicht auf das verpackte Gut.

15. Eine ein- oder mehrteilige Verpackung aus einer mehrschichtigen Verpackungsfolie gemäß einem der Ansprüche 1 - 13.

16. Eine mehrteilige Verpackung nach Anspruch 15, **dadurch gekennzeichnet, dass** sie aus einem Deckel und einem Behälter, vorzugsweise einer Mulde, besteht, wobei der Deckel und/oder der Behälter aus einer mehrschichtigen Verpackungsfolie gemäß einem der Ansprüche 1 - 13 hergestellt wurde.

17. Eine einteilige Verpackung nach Anspruch 15, vorzugsweise in Form eines Schlauchbeutels oder eines Vierrandsiegelbeutels, hergestellt aus einer mehrschichtigen Verpackungsfolie gemäß einem der Ansprüche 1 - 13.

18. Eine Kettenbeutel-Verpackung nach Anspruch 15 hergestellt aus einer mehrschichtigen Verpackungsfolie gemäß einem der Ansprüche 1 - 13, deren über Perforation verbundenden Vierrandsiegelbeutel ggf. ziehharmonikaartig faltbar und jeweils über die Perforation zu einer Portionsverpackung vereinzelbar sind.

19. Eine Verpackung nach einem der Ansprüche 15 - 18, **dadurch gekennzeichnet, dass** das verpackte Gut ein Lebensmittel, vorzugsweise in Form einer Blockware oder in Scheiben wie einem Aufschnitt, einer teilchenförmigen Ware oder vereinzelter Stückgüter vorliegt.

20. Eine Verpackung nach einem der Ansprüche 15 - 19, **dadurch gekennzeichnet, dass** das verpackte Gut wenigstens ein Käse, wenigstens eine Wurst, wenigstens ein Schinken, wenigstens ein Fleisch bzw. Fleischteil, ein Geflügel bzw. Geflügelteil, eine Backware, eine Backzutat, ein Knabbergebäck, ein Snack, Nüsse, Kerne, wenigstens eine Süßware, ein Fisch bzw. Fischteil, ein festes und flüssiges Fertiggericht, eine Pastete, ein Streichfett wie Butter oder Margarine, Mayonnaise, Senf, Ketchup, wenigstens ein Gewürz oder eine Gewürzmischung ist.

21. Eine Verpackung nach Anspruch 19 oder 20, **dadurch gekennzeichnet, dass** das verpackte Gut jeweils in einer für eine Einzelperson ausreichende Portion vorliegt.

## Claims

1. Multilayer packaging film comprising a
(a) paper layer as one of the surface layers with preferably regularly repeating, discontinuous apertures and/or continuous apertures of the paper layer extending as far as the transparent remainder of the film composite comprising the layers b)-d),
(b) a transparent lamination layer made of at least one thermoplastic biopolymer selected from the group of polyhydroxyalkanoates, cellulose, cellulose derivatives, cellulose hydrates, thermoplastic starch, lactic acid homo- and copolymers, polyester made of lactones having 4-10 carbon atoms, copolymers made of at least two monomers of the biopolymers mentioned and transparent mixtures of at least two of the biopolymers mentioned,
(c) optionally at least one transparent layer made of thermoplastic polymers with preferably a defined functionality and optionally with necessary adhesion-promoter layers,
(d) a transparent, optionally multiple-ply heat-sealable layer made of at least one thermoplastic biopolymer selected from the group of polyhydroxyalkanoates, cellulose, cellulose derivatives, cellulose hydrates, thermoplastic starch, lactic acid homo- and copolymers, polyester made of lactones having 4-10 carbon atoms, copolymers made of at least two monomers of the biopolymers mentioned and transparent mixtures of at least two of the biopolymers mentioned.

2. Multilayer packaging film according to Claim 1, **characterized in that** the discontinuous apertures of the paper layer (a) take the form of windows of any shape, preferably polygonal and/or round windows, and the continuous apertures take the form of strips, preferably at least one edge strip, in longitudinal direction of the film web.

3. Multilayer packaging film according to Claim 1 or 2, **characterized in that** the weight per unit area of the paper layer (a) is 20 g/m²-350 g/m².

4. Multilayer packaging film according any of Claims 1-3, **characterized in that** the paper layer (a) consists of an uncoated base paper optionally treated to increase wet strength.

5. Multilayer packaging film according to any of Claims 1-4, **characterized in that** the paper layer (a) consists of kraft paper or thermoformable paper.

6. Multilayer packaging film according to any of Claims 1-5, **characterized in that** the paper layer (a) has been printed and optionally provided with information.

7. Multilayer packaging film according to any of Claims 1-6, **characterized in that** the transparent lamination layer (b) is composed of at least one thermoplastic biopolymer selected from the group comprising poly-ε-caprolactones and comprising polylactides and comprising transparent mixtures of the thermoplastic biopolymers mentioned.

8. Multilayer packaging film according to any of Claims 1-7, **characterized in that** the transparent, optionally multiple-ply heat-sealable layer (d) is composed of at least one thermoplastic biopolymer selected from the group comprising poly-ε-caprolactones and comprising polylactides and comprising transparent mixtures of the thermoplastic biopolymers mentioned.

9. Multilayer packaging film according to Claim 8, **characterized in that** the heat-sealable layer (d) is peelably sealable.

10. Multilayer packaging film according to any of Claims 1-9, **characterized in that** the heat-sealable layer consists of at least two plies, preferably made of the same polymers or of the same type of polymers, but with different physical properties.

11. Multilayer packaging film according to any of Claims 1-10, **characterized in that** at least one layer (c) takes the form of a layer for the optimization of mechanical properties and/or of a barrier layer, preferably of a barrier layer in relation to gases, for example oxygen or water vapour, in relation to moisture, in relation to migration of low-molecular-weight fractions and/or in relation to flavour impairment or odour impairment.

12. Multilayer packaging film according to any of Claims 1-11, **characterized in that**, as reclosure arrangement, a layer (c) takes the form of a transparent pressure-sensitive-adhesive layer between the layer (b) and the heat-sealable layer (d), optionally bonded by way of an adhesion-promoter layer, and optionally another layer (c1) takes the form of barrier layer between the heat-sealable layer (d) and the pressure-sensitive-adhesive layer.

13. Multilayer packaging film according to any of Claims 1-12, **characterized in that** conventional additives, preferably antifog additives, UV stabilizers, UV absorbers, oxygen absorbers, antioxidants, antistatic agents, antiblocking agents and/or lubricants can have been used to provide properties to, and/or to achieve transparent colouring of, at least one of the layers made of thermoplastic polymers.

14. Use of a multilayer packaging film according to any of Claims 1-13 for the production of single- or multiple-part packaging with at least one transparent subregion of the packaging material for viewing the packaged product.

15. Single- or multiple-part packaging made of a multilayer packaging film according to any of Claims 1-13.

16. Multiple-part packaging according to Claim 15, **characterized in that** it consists of a covering and of a container, preferably a tray, where the covering and/or the container has/have been produced from a multilayer packaging film according to any of Claims 1-13.

17. Single-part packaging according to Claim 15, preferably in the form of a tubular bag or of a bag with foil-side seal, produced from a multilayer packaging film according to any of Claims 1-13.

18. Linked-bag packaging according to Claim 15 produced from a multilayer packaging film according to any of Claims 1-13, where bags thereof, with four-side seal and connected by way of perforations, are optionally amenable to concertina-folding and can in each case be separated by way of the perforations to provide portion packaging.

19. Packaging according to any of Claims 15-18, **characterized in that** the packaged product takes the form of food, preferably in massive form, or in slices, an example being sliced meats/cheese, or in the form of particulate product or of individual pieces of products.

20. Packaging according to any of Claims 15-19, **characterized in that** the packaged product is at least one cheese, at least one sausage, at least one type of ham, at least one type of meat or meat portion, one type of poultry or poultry portion, one bakery product, one bakery ingredient, one bakery snack, one other type of snack, nuts, seeds, at least one confectionary product, one fish or fish portion, one solid and liquid ready meal, one type of pate, one spreadable fat such as butter or margarine, mayonnaise, mustard, ketchup, at least one spice/herb/condiment or one mixture of spices/herbs/condiments.

21. Packaging according to Claim 19 or 20, **characterized in that** the packaged product in each case takes the form of a portion sufficient for a single person.

## Revendications

1. Feuille d'emballage multicouche comprenant
(a) une couche de papier en tant que l'une des couches superficielles comportant des ouvertures continues et/ou des ouvertures discontinues de préférence régulièrement itératives de la couche de papier jusqu'au composite de feuille transparent restant comprenant les couches b) - d),
(b) une couche contrecollée transparente à base d'au moins un biopolymère thermoplastique, choisi dans le groupe constitué par les polyhydroxyalcanoates, le cellulose, les dérivés de cellulose, les hydrates de cellulose, l'amidon thermoplastique, les homopolymères ou copolymères d'acide lactique, les polyesters de lactones ayant de 4 à 10 atomes de carbone, les copolymères d'au moins deux monomères des biopolymères cités et des mélanges transparents d'au moins deux des biopolymères cités,
(c) éventuellement au moins une couche transparente à base de polymères thermoplastiques ayant de préférence une fonctionnalité déterminée et des couches d'agent d'adhérence éventuellement requises,
d) une couche thermosoudable transparente, éventuellement multiplis, à base d'au moins un biopolymère thermoplastique, choisi dans le groupe constitué par les polyhydroxyalcanoates, le cellulose, les dérivés de cellulose, les hydrates de cellulose, l'amidon thermoplastique, les homopolymères ou copolymères d'acide lactique, les polyesters de lactones ayant de 4 à 10 atomes de carbone, les copolymères d'au moins deux monomères des biopolymères cités et des mélanges transparents d'au moins deux des biopolymères cités.

2. Feuille d'emballage multicouche selon la revendication 1, **caractérisée en ce que** les ouvertures discontinues de la couche de papier (a) se trouvent sous forme de fenêtre en configuration quelconque, de préférence sous forme de fenêtre polygonale et/ou de fenêtre ronde, et les ouvertures continues sont présentes sous forme de bande, de préférence sous forme d'au moins une bande latérale, dans le sens de la longueur de la feuille continue.

3. Feuille d'emballage multicouche selon la revendication 1 ou 2, **caractérisée en ce que** la couche de papier (a) présente un grammage de 20 g/m² - 350 g/m².

4. Feuille d'emballage multicouche selon l'une quelconque des revendications 1 à 3, **caractérisée en ce que** la couche de papier (a) est constituée d'un papier brut non couché, éventuellement doté de résistance à l'humidité.

5. Feuille d'emballage multicouche selon l'une quelconque des revendications 1 à 4, **caractérisée en ce que** la couche de papier (a) est constituée de papier kraft ou de papier apte à l'emboutissage.

6. Feuille d'emballage multicouche selon l'une quelconque des revendications 1 à 5, **caractérisée en ce que** la couche de papier (a) est imprimée et éventuellement munie d'informations.

7. Feuille d'emballage multicouche selon l'une quelconque des revendications 1 à 6, **caractérisée en ce que** la couche contrecollée (b) transparente est constituée d'au moins un biopolymère thermoplastique choisi dans le groupe comprenant les poly-ε-caprolactones et les polylactides et des mélanges transparents des biopolymères thermoplastiques cités.

8. Feuille d'emballage multicouche selon l'une quelconque des revendications 1 à 7, **caractérisée en ce que** la couche thermosoudable (d) transparente, éventuellement multiplis, est constituée d'au moins un biopolymère thermoplastique choisi dans le groupe comprenant les ροly-ε-caprolactones et les polylactides et des mélanges transparents des biopolymères cités.

9. Feuille d'emballage multicouche selon la revendication 8, **caractérisée en ce que** la couche thermosoudable (d) est soudable de façon pelable.

10. Feuille d'emballage multicouche selon l'une quelconque des revendications 1 à 9, **caractérisée en ce que** la couche thermosoudable est constituée d'au moins deux plis, de préférence à base du même polymère ou du même type de polymère, mais ayant des propriétés physiques différentes.

11. Feuille d'emballage multicouche selon l'une quelconque des revendications 1 à 10, **caractérisée en ce qu'**au moins une couche (c) est présente en tant qu'une couche destinée à l'optimisation de propriétés mécaniques et/ou en tant qu'une couche barrière, de préférence en tant qu'une couche barrière aux gaz, tels que l'oxygène ou la vapeur d'eau, à l'humidité, à la migration de fractions de faible moléculaire et/ou à l'altération du goût ou de l'odeur.

12. Feuille d'emballage multicouche selon l'une quelconque des revendications 1 à 11, **caractérisée en ce qu'**une couche (c) est présente entre la couche (b) et la couche thermosoudable (d) éventuellement liée par une couche d'agent d'adhérence, sous forme d'une couche d'adhésif transparente et éventuellement une couche (c1) supplémentaire est présente en tant que couche barrière entre la couche thermosoudable (d) et la couche d'adhésif, en tant que système de refermeture.

13. Feuille d'emballage multicouche selon l'une quelconque des revendications 1 à 12, **caractérisée en ce qu'**au moins une des couches à base de polymères thermoplastiques peut être munie d'additifs usuels, de préférence d'additifs antibuée, de stabilisants UV, d'absorbeurs UV, d'absorbeurs d'oxygène, d'antioxydants d'agents antistatiques, d'agents anti-adhérence de contact et/ou de lubrifiants et/ou colorée de façon transparente.

14. Utilisation d'une feuille d'emballage multicouche selon l'une quelconque des revendications 1 à 13, pour la production d'un emballage mono- ou multicouche comportant au moins une zone partielle transparente du matériau d'emballage, permettant de voir au travers le produit emballé.

15. Emballage en une ou plusieurs parties à base d'une feuille multicouche selon l'une quelconque des revendications 1 à 13.

16. Emballage en une ou plusieurs parties selon la revendication 15, **caractérisée en ce qu'**il est constitué d'un couvercle et d'un récipient, de préférence d'un bac, le couvercle et/ou le récipient ayant été produit(s) à partir d'une feuille d'emballage multicouche selon l'une quelconque des revendications 1 à 13.

17. Emballage monobloc selon la revendication 15, de préférence sous forme d'un sachet tubulaire ou d'un sachet scellé sur quatre côtés, produit à partir d'une feuille d'emballage multicouche selon l'une quelconque des revendications 1 à 13.

18. Emballage de sachets en chapelet selon la revendication 15, produit à partir d'une feuille d'emballage multicouche selon l'une quelconque des revendications 1 à 13, dont les sachets scellés sur quatre côtés, assemblés par l'intermédiaire de perforation, peuvent éventuellement être repliés en accordéon et séparés chacun au moyen de la perforation en un emballage portion.

19. Emballage selon l'une quelconque des revendications 15 à 18, **caractérisé en ce que** le produit emballé est un produit alimentaire, de préférence sous forme d'une marchandise en bloc ou en tranches telle qu'une charcuterie, d'une marchandise particulaire ou d'un produit en morceau séparé.

20. Emballage selon l'une quelconque des revendications 15 à 19, **caractérisé en ce que** le produit emballé est au moins un fromage, au moins une saucisse, au moins un jambon, au moins une viande ou un morceau de viande, une volaille ou une partie de volaille, un produit de boulangerie, un ingrédient de cuisine, un en-cas, une collation, des noix, des graines, au moins un produit de confiserie, un poisson ou une partie de poisson, un plat préparé solide ou liquide, un pâté, une matière grasse à tartiner telle que du beurre ou de la margarine, de la mayonnaise, de la moutarde, du ketchup, au moins une épice ou un mélange d'épices.

21. Emballage selon la revendication 19 ou 20, **caractérisé en ce que** le produit emballé se trouve chaque fois en une portion suffisante pour une personne individuelle.
